# EUROPÄISCHE PATENTSCHRIFT

(11) **EP 3 404 152 B1**
(45) Veröffentlichungstag und Bekanntmachung des Hinweises auf die Patenterteilung: **27.05.2020**
(21) Anmeldenummer: 18166707.2
(22) Anmeldetag: 11.04.2018
(51) Int. Cl.: E03D 11/14, E03C 1/32, F16B 37/00

(54) **BEFESTIGUNGSSET ZUM BEFESTIGEN EINES MONTAGEGESTELLS FÜR SANITÄROBJEKTE UND VERWENDUNG EINES SOLCHEN BEFESTIGUNGSSETS**
FIXING SET FOR FIXING A MOUNTING FRAME FOR SANITARY OBJECTS AND USE OF SUCH A FIXING SET
ENSEMBLE DE FIXATION DESTINÉ À LA FIXATION D'UN PLATEAU DE MANUTENTION POUR OBJETS SANITAIRES ET UTILISATION D'UN TEL ENSEMBLE DE FIXATION

(30) Priorität: 17.05.2017 DE 102017110766
(43) Veröffentlichungstag der Anmeldung: 21.11.2018
(73) Patentinhaber: Viega Technology GmbH & Co. KG, 57439 Attendorn (DE)
(72) Erfinder: Dietermann, Patrick, 57368 Lennestadt (DE); Rothstein, Gerhard, 42553 Velbert (DE); Büdenbender, Ludger, 57489 Drolshagen (DE)
(74) Vertreter: Cohausz & Florack

(56) Entgegenhaltungen:
- EP-A1- 1 750 021
- EP-A2- 0 960 983
- EP-A2- 1 655 418
- EP-A2- 2 752 526

## Beschreibung

Die Erfindung betrifft ein Befestigungsset zum Befestigen eines Montagegestells für Sanitärobjekte, insbesondere für einen Spülkasten, eine WC-Schüssel und/oder ein Waschbecken, an einer Gebäudewand, wobei das Montagegestell aus Hohlprofilstangen gebildet ist, mit einem mit dem Montagegestell lösbar verbindbaren, kanalförmigen Verbindungsteil, das einen radial vorstehenden Verbindungsabschnitt aufweist, mit einer Verbindungsstange, die in dem Verbindungsteil gelagert ist, mit einem an einem Ende der Verbindungsstange angebrachten Befestigungsteil, das an einer Gebäudewand befestigbar ist, und mit einem Steckteil.

Ein derartiges Befestigungsset ist aus der EP 1 260 639 B1 bekannt. Das als Wandhalterung bezeichnete Befestigungsset umfasst ein hülsenförmiges Lagerteil mit einem radial vorstehenden Anschlagnocken, eine Verbindungsstange in Form einer Kopfschraube, die an ihrem Kopfende mittels des Lagerteils an einem Montagegestell für Sanitärapparate befestigt wird, und ein Befestigungsteil, das am anderen Ende der Kopfschraube angebracht und an einer Gebäudewand befestigt wird. Das Montagegestell weist zwei vertikal auszurichtende Hohlprofilstangen auf, die im Querschnitt C-förmig sind. Jeweils am oberen Ende sind in die Hohlprofilstangen gegenüberliegend zwei Löcher eingearbeitet, an denen das hülsenförmige Lagerteil abgestützt ist. Die Löcher sind hierzu schlüssellochartig ausgebildet und weisen zwei radiale Erweiterungen auf, die so ausgebildet sind, dass jeweils ein Lagerteil mit dem Anschlagnocken einsetzbar ist. Das Lagerteil weist zudem einen federelastischen Rastlappen auf, der an dem frontseitigen Loch der Hohlprofilstange einrastet, um das Lagerteil gegen Herausfallen zu sichern. Im eingesetzten Zustand greift das Lagerteil in das hintere der beiden Löcher ein und verankert dabei zusammen mit dem Anschlagnocken und dem Rastlappen die Kopfschraube am Montagegestell. Die Kopfschraube und das Befestigungsteil sind mittels eines aufgesteckten Riegels, der als U-förmige Clipmutter ausgebildet ist, lösbar miteinander verbunden. Das Befestigungsteil weist einen Schaft mit einem glatten Durchgang auf, in den das dem Montagegestell abgewandte Ende der Kopfschraube eingesteckt wird. Der Schaft ist mit Öffnungen versehen, in welche die Clipmutter als Riegel eingesteckt und damit quer zur Längsachse der Kopfschraube auf dieselbe aufgesteckt wird. Die Axialsicherung der Kopfschraube an dem Lagerteil erfolgt mittels einer Kontermutter. Diese bekannte Wandhalterung ermöglicht eine schnelle Montage des Montagegestells mit einer Grobeinstellung der Montagetiefe und einer nachfolgenden Feinjustierung. Allerdings ist der maximale Einstellbereich dieser Wandhalterung begrenzt. Ferner erscheint diese Wandhalterung hinsichtlich einer einfachen, für den Anwender leicht verständlichen Handhabung verbesserbar.

Die EP 2 752 526 A2 offenbart eine Vorrichtung zur Wandmontage eines Montagegestells für Sanitärobjekte, insbesondere für einen Spülkasten und eine WC-Schüssel. Die bekannte Vorrichtung umfasst ein Wandbefestigungselement, einen Positionierer, der in das Montagegestell einsetzbar ist, ein Verriegelungselement, das im Inneren des Wandbefestigungselements verschiebbar ist, ein Mutternschraubenteil und eine Verbindungsstange mit Außengewinde, die sich entlang einer Montageachse erstreckt und den Positionierer mit dem Verriegelungselement verbindet. Das Verriegelungselement weist einen inneren Bewegungsspielsitz auf, der entlang der Montageachse offen ist, um ein Gleiten der Verbindungsstange zu ermöglichen, und an gegenüberliegenden Enden entlang einer Querachse senkrecht zur Montageachse geschlossen ist, um dem Verriegelungselement nur einen vorgegebenen Bewegungsbetrag entlang der Querachse zu ermöglichen.

Davon ausgehend liegt der Erfindung die Aufgabe zugrunde, ein Befestigungsset der eingangs genannten Art zu schaffen, das kostengünstig herstellbar ist und ohne Werkzeug eine einfache und schnelle Montage bietet.

Gelöst wird diese Aufgabe durch ein Befestigungsset mit den im Anspruch 1 angegebenen Merkmalen. Bevorzugte und vorteilhafte Ausgestaltungen des erfindungsgemäßen Befestigungssets sind in den Unteransprüchen angegeben.

Das erfindungsgemäße Befestigungsset ist dadurch gekennzeichnet, dass das Steckteil zur axialen Festlegung des Verbindungsteils an dem Montagegestell in eine Öffnung einer Hohlprofilstange des Montagegestells einsetzbar ist und im montierten Zustand das Verbindungsteil und die Hohlprofilstange zueinander sperrt, wobei der Verbindungsabschnitt einen Spalt aufweist, in den ein Abschnitt einer Hohlprofilstangenwand des Montagegestells einbringbar ist. Das in Bezug auf das Verbindungsteil separat gefertigte Steckteil hat somit eine Verriegelungsfunktion. Durch die erfindungsgemäße Ausführung des Steckteils sowie des Verbindungsteils lässt sich das Verbindungsteil einfach und schnell an dem Montagegestell montieren. Zugleich wird eine zuverlässige Axialsicherung zwischen dem Verbindungsteil und dem Montagegestell erzielt. Das Steckteil und das Verbindungsteil lassen sich hierzu kostengünstig herstellen, beispielsweise als Kunststoff-Spritzgießteile. Für die Axialsicherung zwischen dem Verbindungsteil und dem Montagegestell wird kein Werkzeug benötigt, denn das Steckteil, welches im montierten Zustand das Verbindungsteil und die Hohlprofilstange zueinander sperrt, lässt sich ohne Werkzeug in eine Öffnung, vorzugsweise eine obere, vertikale Öffnung der Hohlprofilstange des Montagegestells einsetzen.

Eine vorteilhafte Ausgestaltung der Erfindung ist dadurch gekennzeichnet, dass das Steckteil als Kappe oder Stopfen ausgebildet ist, die bzw. der in eine vertikale Hohlprofilstange des Montagegestells einsteckbar ist. Die betreffende Öffnung der Hohlprofilstange lässt sich somit durch das Steckteil verschließen. Durch das als Kappe oder Stopfen ausgeführte Steckteil lässt sich der optische Eindruck des Montagegestells verbessern. Die Axialsicherung des Verbindungsteils wirkt durch die Kappe bzw. den Stopfen hochwertig. Die Kappe oder der Stopfen können dabei gleichzeitig als Designteil dienen bzw. ein Logo und/oder ein dekoratives Element aufweisen. Ferner lassen sich die schmalen Kanten der Hohlprofilstange, an denen sich Handwerker bei der Befestigung und der Verkleidung des Montagegestells eventuell verletzen können, durch die Kappe abdecken, so dass die Kappe auch einen Schutz gegen Verletzungen bietet.

Nach einer weiteren Ausgestaltung weist das Steckteil einen deckelartigen Abschnitt auf, dessen Oberseite vorzugsweise im Wesentlichen eben ausgebildet ist. Die betreffende Öffnung der Hohlprofilstange lässt sich dadurch mit geringem Materialeinsatz wirksam, vorzugsweise vollständig, in optisch ansprechender Weise verschließen.

Eine weitere vorteilhafte Ausgestaltung der Erfindung ist dadurch gekennzeichnet, dass das Steckteil an der Unterseite des deckelartigen Abschnitts mehrere Vorsprünge aufweist, wobei mindestens einer der Vorsprünge im montierten Zustand des Befestigungssets die Lage des Steckteils relativ zu der Hohlprofilstange festlegt, und wobei mindestens ein anderer der Vorsprünge im montierten Zustand des Befestigungssets eine Axialverschiebung des Verbindungsteils sperrt. Durch diese Ausgestaltung verschiedener Vorsprünge lässt sich eine optimale Funktionalität erzielen. Insbesondere kann durch diese Ausgestaltung sichergestellt werden, dass das Steckteil in vier unterschiedlichen Stellungen relativ zu der Hohlprofilstange in diese eingesteckt werden kann. Dies führt zu einer besonders einfachen und schnellen Montage des Steckteils.

In diesem Zusammenhang sieht eine weitere Ausgestaltung der Erfindung vor, dass der die Lage des Steckteils relativ zu der Hohlprofilstange festlegende Vorsprung kragenförmig ausgebildet ist. Die kragenförmige Ausgestaltung des Vorsprungs verleiht dem Steckteil eine hohe Stabilität.

Das Verbindungsteil besitzt vorzugsweise einen Innengewindeabschnitt, während die Verbindungsstange als Gewindestange ausgeführt ist und durch eine Radialverschiebung, die geringfügig größer als die Innengewindetiefe ist, lösbar mit dem Innengewindeabschnitt verbindbar bzw. aus dem Innengewindeabschnitt ausrückbar ist. Ferner weist das Verbindungsteil vorzugsweise einen kanalförmigen Abschnitt auf, in welchem die Verbindungsstange bzw. Gewindestange axial verschiebbar geführt ist, und einen rinnenförmigen Abschnitt, der sich an den kanalförmigen Abschnitt anschließt. Das Verbindungsteil ist dabei mit einem als Schieber ausgeführten Riegel versehen, der auf dem Verbindungsteil axial zur Längsachse der Verbindungsstange aus einer Nicht-Kontaktstellung in eine Kontaktstellung und umgekehrt verschiebbar ist, wobei der Schieber (Riegel) einen der Verbindungsstange zugewandten Kontaktabschnitt aufweist, der in der Kontaktstellung an dem Außengewinde der Verbindungsstange (Gewindestange) anliegt, so dass das Außengewinde der Verbindungsstange in der Kontaktstellung mit dem Innenteilgewinde in Eingriff steht.

Eine weitere vorteilhafte Ausgestaltung der Erfindung ist dadurch gekennzeichnet, dass der eine Axialverschiebung des Verbindungsteils sperrende Vorsprung aus mehreren Stegen gebildet ist, die einen kreuzförmigen Durchgang begrenzen. Hierdurch wird wiederum sichergestellt, dass das Steckteil in vier unterschiedlichen Stellungen relativ zu der Hohlprofilstange in diese eingesteckt werden kann, wobei der Durchgang zur Aufnahme eines Abschnitts der Verbindungsstange und damit für die Einstellung der Montagetiefe des Montagegestells genutzt werden kann. Hierdurch lässt sich bei vorgegebener Länge der Verbindungsstange bzw. bei platzsparender Ausführung des Befestigungssets der maximale Einstellbereich der Montagetiefe des Montagegestells erheblich vergrößern.

Die den kreuzförmigen Durchgang begrenzenden Stege des Stegteils weisen vorzugsweise jeweils ein L- oder winkelförmiges Querschnittprofil auf. Die Stege besitzen hierdurch eine hohe Biegesteifigkeit sowie eine hohe Stabilität.

Erfindungsgemäß weist der Verbindungsabschnitt einen Spalt auf, in den ein Abschnitt einer Hohlprofilstangenwand des Montagegestells einbringbar ist. Dies schafft einen zusätzlichen Formschluss zwischen dem Verbindungsteil und der Hohlprofilstange des Montagegestells, so dass sich eine besonders zuverlässige Axialverriegelung des Verbindungsteils an dem Montagegestell ergibt. Der Spalt ist dabei vorzugsweise durch zwei an dem Verbindungsabschnitt ausgebildete Flansche definiert.

Nach einer weiteren vorteilhaften Ausgestaltung des Verbindungsabschnitts ist der Flansch, der im montierten Zustand des Befestigungssets innerhalb der Hohlprofilstange angeordnet ist, kreisförmig oder im Wesentlichen kreisförmig ausgebildet. Der andere Flansch, nämlich der Flansch, der im montierten Zustand des Befestigungssets außerhalb der Hohlprofilstange angeordnet ist, ist dagegen vorzugsweise nicht-kreisförmig, besonders bevorzugt im Wesentlichen oval ausgebildet.

Eine schnelle sowie zuverlässige Axialsicherung des Verbindungsteils an der Hohlprofilstange des Montagegestells ergibt sich nach einer weiteren bevorzugten Ausgestaltung der Erfindung, wonach der kreisförmige oder im Wesentlichen kreisförmige Flansch einen Außendurchmesser aufweist, der größer ist als ein radiales Außenmaß des nicht-kreisförmigen oder im Wesentlichen oval ausgebildeten Flansches. Der nicht-kreisförmige oder im Wesentlichen ovale Flansch besitzt dabei vorzugsweise ein weiteres radiales Außenmaß, das größer ist als der Außendurchmesser des kreisförmigen oder im Wesentlichen kreisförmigen Flansches.

Die Lehre der vorliegenden Erfindung beinhalt insbesondere die Verwendung des erfindungsgemäßen Befestigungssets, vorzugsweise in einer der vorgenannten Ausgestaltungen, zum Befestigen eines Montagegestells für Sanitärobjekte, beispielsweise für einen Spülkasten, eine WC-Schüssel und/oder ein Waschbecken, an einer Gebäudewand.

Nachfolgend wird die Erfindung anhand einer Ausführungsbeispiele darstellenden Zeichnung näher erläutert. Es zeigen:
- Fig. 1: ein Befestigungsset, das an einem oberen Abschnitt einer Hohlprofilstange eines Montagegestells befestigt ist und sich in einem entriegelten Zustand befindet, in einer perspektivischen Seitenansicht;
- Fig. 2: das Befestigungsset gemäß Fig. 1 in einer entsprechenden perspektivischen Seitenansicht, wobei jedoch Teile des Befestigungssets und der obere Abschnitt der Hohlprofilstange vertikal geschnitten dargestellt sind;
- Fig. 3: das Befestigungsset gemäß Fig. 1 in einer entsprechenden perspektivischen Seitenansicht, wobei sich das Befestigungsset in einem verriegelten Zustand befindet;
- Fig. 4: das Befestigungsset gemäß Fig. 3 in einer entsprechenden perspektivischen Seitenansicht, wobei jedoch Teile des Befestigungssets und der obere Abschnitt der Hohlprofilstange wiederum vertikal geschnitten dargestellt sind;
- Fig. 5 und 6: eine Befestigungsvorrichtung in einer perspektivischen Seitenansicht, in einem entriegelten und einem verriegelten Zustand, wobei axial zueinander verschiebbare Teile der Vorrichtung jeweils axial geschnitten gezeigt sind;
- Fig. 7: die Vorrichtung aus Fig. 5 befestigt an einem oberen Abschnitt einer Hohlprofilstange, die vertikal geschnitten ist, ohne Gewindestange, in einer perspektivischen Seitenansicht;
- Fig. 8: die Teile aus Fig. 7 in einer Explosionsdarstellung; und
- Fig. 9: die Teile aus den Figuren 7 und 8 horizontal geschnitten, in einer weiteren perspektivischen Ansicht.

Das in der Zeichnung dargestellte Befestigungsset dient der Abstützung und Befestigung eines Montagegestells für Sanitärgegenstände wie zum Beispiel einen Spülkasten, eine WC-Schüssel und/oder ein Waschbecken an einer Gebäudewand. oder an einem Träger. Von dem Montagegestell ist in der Zeichnung lediglich ein oberer Abschnitt einer vertikal auszurichtenden Hohlprofilstange 2 gezeigt. Das Montagegestell weist üblicherweise mindestens zwei vertikal auszurichtende Hohlprofilstangen 2 auf, die durch einen oder mehrere Querträger (Querstreben) miteinander verbunden sind.

Die Hohlprofilstangen 2 können beispielsweise aus Vierkantrohren oder aus offenen Profilstangen, die im Querschnitt im Wesentlichen C-förmig ausgebildet sind, bestehen. Des Weiteren können die Hohlprofilstangen 2 an mindestens zwei ihrer benachbarten Längskanten ausgebildete Längsnuten 2.1, 2.2 aufweisen, die dem formschlüssigen Anklemmen eines Verbinders zum Befestigen einer oder mehrerer weiterer Hohlprofilstangen dienen.

Das Befestigungsset ist aus einem an einer Gebäudewand zu befestigenden Befestigungsteil 3, einem mit dem Montagegestell lösbar verbindbaren, kanalförmigen Verbindungsteil 5, einer Verbindungsstange 4, die in dem Verbindungsteil 5 gelagert ist, und einem Steckteil 7 zusammengesetzt. Das Steckteil 7 wird zur axialen Festlegung des Verbindungsteils 5 an dem Montagegestell in eine Öffnung 2.6 einer Hohlprofilstange 2 des Montagegestells formschlüssig eingesetzt. Das Steckteil 7 fixiert und sperrt im montierten Zustand das Verbindungsteil 5 und die Hohlprofilstange 2 zueinander.

Die Verbindungsstange 4 ist als bolzen- oder stangenförmiges Schraubelement ausgeführt. Sie kann auch als Gewindestange bezeichnet werden und besitzt zumindest über einen Längenabschnitt ein Außengewinde 4.1.

Jeweils am oberen Ende der vertikal auszurichtenden Hohlprofilstangen 2 des Montagegestells sind zwei gegenüberliegende Durchgangsöffnungen (Löcher) 2.3, 2.4 eingearbeitet, die der Befestigung des Verbindungsteils 5 dienen. Das Verbindungsteil 5 weist hierzu einen radial vorstehenden Verbindungsabschnitt 5.1 auf, über den es formschlüssig mit dem Montagegestell verbindbar ist. Der Verbindungsabschnitt 5.1 ist derart ausgebildet, dass über ihn das Verbindungsteil 5 mittels des Steckteils 7 am Montagegestell axial festlegbar ist.

Hierzu weist der Verbindungsabschnitt 5.1 einen Spalt 5.2 auf, in den ein Abschnitt des Montagegestells, nämlich ein die Durchgangsöffnung 2.4 begrenzender Abschnitt der Hohlprofilstange 2 einbringbar ist. Der Spalt 5.2 ist durch zwei an dem kanalförmigen Verbindungsteil angeformte Flansche 5.3, 5.4 definiert.

Der am stirnseitigen Ende des kanalförmigen Verbindungsteils 5 angeordnete Flansch 5.3 ist vorzugsweise kreisförmig ausgebildet. Der dazu axial beabstandete Flansch 5.4 ist oval ausgebildet. Der Spalt 5.2 oder axiale Abstand zwischen den beiden Flanschen 5.3, 5.4 entspricht der Wandstärke oder ist geringfügig größer als die Wandstärke der Hohlprofilstange 2.

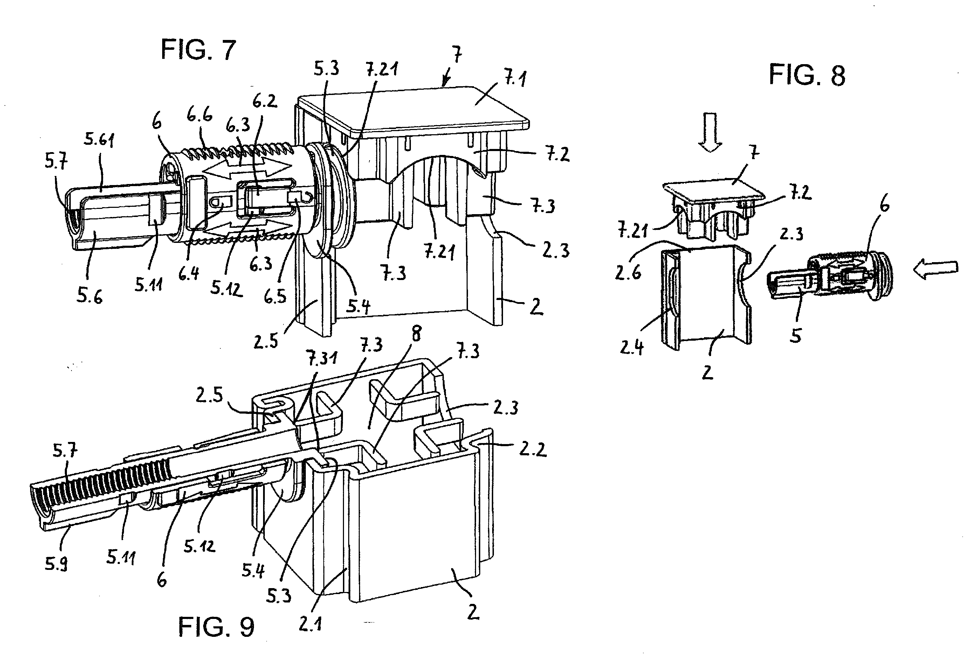

Die beiden Durchgangsöffnungen 2.3, 2.4 der Hohlprofilstange 2 sind ebenfalls unterschiedlich ausgebildet. Die Öffnung 2.3, die in der dem Raum zugewandten Hohlprofilstangenseite eingearbeitet ist, ist vorzugsweise als kreisrundes Loch ausgeführt, während die andere Öffnung 2.4, die in der der Gebäudewand zugewandten Hohlprofilstangenseite eingearbeitet ist, als ovales Loch ausgeführt ist. Der kleinste Innenweite des ovalen Lochs 2.4 ist deutlich kleiner als der Durchmesser der anderen Öffnung 2.3 und auch deutlich kleiner als der Außendurchmesser des kreisförmigen Flansches 5.3 des kanalförmigen Verbindungsteils. Die Durchgangsöffnungen 2.3, 2.4 sind so bemessen, dass das Verbindungsteil 5 über die kreisförmige Öffnung 2.3 hindurch soweit in die ovale Öffnung 2.4 eingeführt werden kann, bis der kreisförmige Flansch 5.3 an der Innenseite der die ovale Öffnung 2.4 aufweisenden Wandung 2.5 der Hohlprofilstange 2 anschlägt (vgl. Figuren 8 und 9). Der ovale Flansch 5.4 wird dabei durch das ovale Loch 2.4 hindurchgeführt und befindet sich dann an der Außenseite der Wandung 2.5.

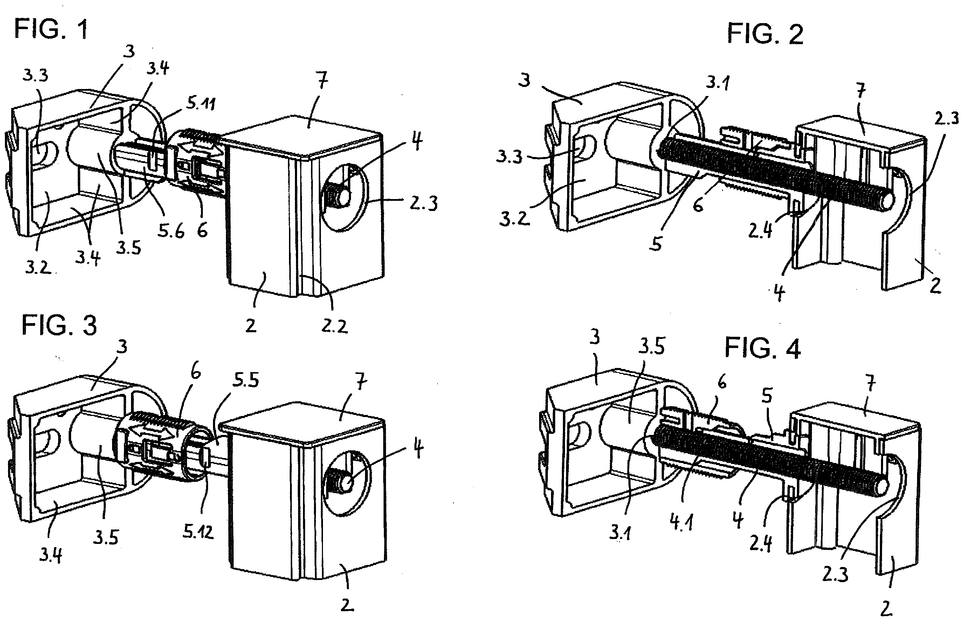

Anschließend wird das Steckteil 7 von oben in die Hohlprofilstange 2 eingesteckt, um das Verbindungsteil 5 am Montagegestell axial festzulegen. Das Steckteil 7 ist vorzugsweise als Stopfen oder Kappe ausgebildet, um die obere Endöffnung 2.6 der Hohlprofilstange 2 zu verschließen. Das Steckteil 7, das auch als Verschlusskappe bezeichnet werden kann, weist einen deckelartigen Abschnitt 7.1 auf, dessen Oberseite vorzugsweise im Wesentlichen eben ausgebildet ist. An der Unterseite des deckelartigen Abschnitts 7.1 sind in die Hohlprofilstange 2 einsteckbare Stege oder Vorsprünge 7.2, 7.3 ausgebildet. Einer dieser Vorsprünge ist beispielsweise in Form eines umlaufenden Kragens 7.2 ausgebildet, der vier im Wesentlichen rechtwinklig zueinander angeordnete Seitenabschnitte aufweist, wobei der jeweilige Seitenabschnitt eine konkave Einbuchtung 7.21 aufweist. In eine dieser Einbuchtungen 7.21 greift teilweise der kreisförmige Flansch 5.3 des Verbindungsteils 5 ein. Die Seitenabschnitte des kragenförmigen Vorsprungs 7.2 verlaufen im montierten Zustand der Verschlusskappe 7 nahe oder dicht an den Innenseiten der Hohlprofilstange 2 (vgl. Figuren 2 und 4).

Die anderen Vorsprünge 7.3 der Kappe 7 sind in Form von Stegen ausgebildet, die innerhalb des Kragens 7.2 angeordnet sind. Die Stege 7.3 ragen deutlich tiefer in die Hohlprofilstange 2 als der kragenförmige Vorsprung 7.2. Die Stege (Vorsprünge) 7.3 weisen jeweils ein im Wesentlichen L- oder winkelförmiges Querschnittprofil auf. Sie begrenzen einen kreuzförmigen Durchgang (vgl. Fig. 9), wobei die Verbindungsstange (Gewindestange) 4 im montierten Zustand des Befestigungssets koaxial zu einer der sich kreuzenden Achsen des Durchgangs 8 verläuft. Die im montierten Zustand der Kappe 7 vertikal verlaufenden Kanten 7.31 zweier der Stege (Vorsprünge) 7.3 liegen unmittelbar oder mit geringem Spiel an dem kreisförmigen Flansch 5.3 des eingesetzten Verbindungsteils an, so dass das Verbindungsteil 5 an dem Montagegestell bzw. der Hohlprofilstange 2 axial festgelegt ist.

Das an einer Gebäudewand anzubringende Befestigungsteil 3 weist ein Gewindeloch 3.1 auf, in welches die als Gewindestange ausgeführte Verbindungsstange 4 einschraubbar ist. Das Befestigungsteil 3 besitzt einen plattenförmigen Abschnitt 3.2 mit einer Durchgangsöffnung 3.3 zum Anbringen einer Befestigungsschraube (nicht gezeigt), wobei der Kopf der Schraube im montierten Zustand vorzugsweise mit einer Unterlegscheibe an der Innenseite des Befestigungsteils 3 anliegt. Die Durchgangsöffnung 3.3 ist vorzugsweise als Langloch ausgebildet. Des Weiteren weist das Befestigungsteil 3 von dem plattenförmigen Abschnitt abstehende Stege 3.4 auf. Die Stege 3.4 schließen einen das Gewindeloch 3.1 zum Einschrauben der Gewindestange 4 aufweisenden Schraubdom 3.5 ein bzw. sind an den Schraubdom 3.5 angeformt. Das dem Montagegestell zugewandte Ende des Schraubdoms 3.5 sowie die dem Montagegestell zugewandten Kanten der Stege 3.4 schließen vorzugsweise im Wesentlichen flächenbündig zueinander ab.

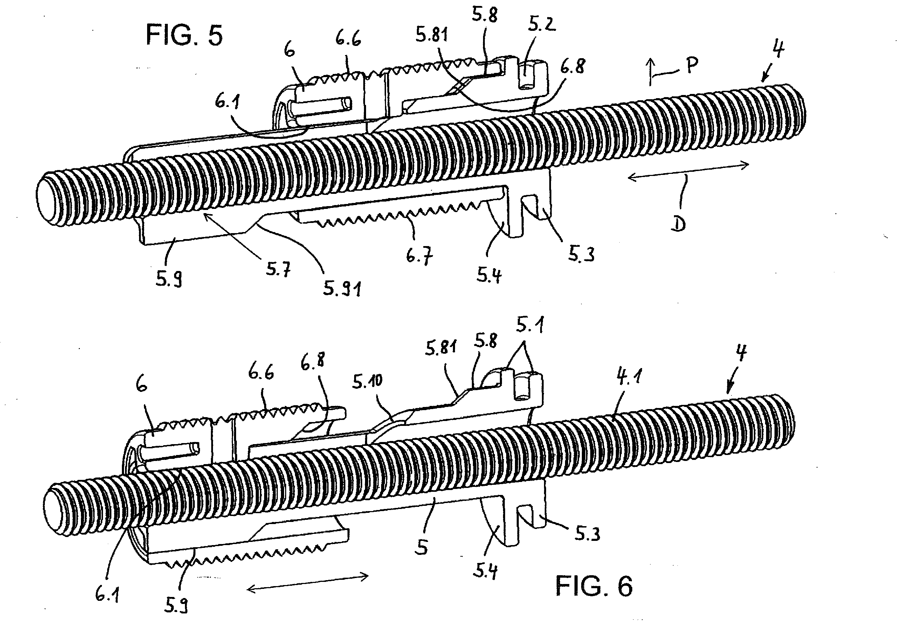

Die Verbindungsstange (Gewindestange) 4 ist in dem kanalförmigen Verbindungsteil 5 axial verschiebbar geführt. Das Verbindungsteil 5 weist einen hülsenförmigen Abschnitt 5.5 auf, an den sich axial ein rinnenförmiger Abschnitt 5.6 anschließt. Die Flansche 5.3, 5.4 sind an dem hülsenförmigen Abschnitt 5.5 angeordnet. Das Verbindungsteil 5 hat entlang seines hülsenförmigen Abschnitts 5.5 eine ovale Innenquerschnittsfläche. Die Innenseite des hülsenförmigen Abschnitts 5.5 ist vorzugsweise glatt oder im Wesentlichen glatt ausgebildet. Die kleinste Innenweite der ovalen Innenquerschnittsfläche des hülsenförmigen Abschnitts 5.5 ist geringfügig größer als der Außendurchmesser des Gewindes 4.1 der Verbindungsstange 4. Der rinnenförmige Abschnitt 5.6 des Verbindungsteils 5 weist innenseitig ein rinnenförmiges Innenteilgewinde 5.7 auf (vgl. Fig. 5, 7 und 9).

Das Innenteilgewinde 5.7 ist passend zu dem Außengewinde 4.1 der Verbindungsstange 4 ausgebildet. Durch eine bestimmte Radialverschiebung bzw. ein geringfügiges Absenken des am Montagegestell axial festgelegten Verbindungsteils 5 gegenüber der am Befestigungsteil 3 befestigten Verbindungsstange (Gewindestange) 4 können das rinnenförmige Innenteilgewinde 5.7 des Verbindungsteils und das Außengewinde 4.1 der Verbindungsstange außer Eingriff gebracht und das Verbindungsteil 5 sodann entlang der Verbindungsstange 4 axial verschoben werden. Die besagte Radialverschiebung und die axiale Verschiebung sind in Fig. 5 durch einen kleinen vertikalen Pfeil P bzw. einen Doppelpfeil D angedeutet.

Auf dem kanalförmigen Verbindungsteil 5 sitzt der als Schieber ausgebildete Riegel 6. Er ist axial zur Längsachse des Verbindungsteils 5 aus einer Nicht-Kontaktstellung in eine Kontaktstellung und umgekehrt verschiebbar und weist einen der Verbindungsstange (Gewindestange) 4 zugewandten Kontaktabschnitt 6.1 auf, der in der Kontaktstellung am Außengewinde 4.1 der Verbindungsstange anliegt. Der Kontaktabschnitt 6.1 des Riegels ist als Vorsprung ausgebildet. Die Längsöffnung 5.61 des rinnenförmigen Abschnitts 5.6 des Verbindungsteils definiert eine Axialführung für den Riegel 6, wobei der Kontaktabschnitt 6.1 des Riegels in der Verriegelungsstellung in der Längsöffnung 5.61 aufgenommen ist.

In den Figuren 2 und 4 bis 6 ist gut zu erkennen, dass das kanalförmige Verbindungsteil 5 an seiner Außenseite zwei radiale Absätze 5.8, 5.9 aufweist, die an entgegengesetzten Umfangsabschnitten des Verbindungsteils 5 angeordnet und axial voneinander beabstandet sind. Beide Absätze 5.8, 5.9 haben jeweils eine schräg zur Längsachse des Verbindungsteils 5 verlaufende Gleitkante oder Gleitfläche 5.81, 5.91. Die beiden Gleitkanten bzw. Gleitflächen 5.81, 5.91 sind an einander zugewandten Enden der beiden Absätze 5.8, 5.9 ausgebildet. Zudem ist am Übergang zwischen dem rinnenförmigen Abschnitt 5.6 und dem hülsenförmigen Abschnitt 5.5, und zwar am Rand der Längsöffnung 5.61 eine schräg zur Längsachse des Verbindungsteils 5 verlaufende Gleitkante oder Gleitfläche 5.10 ausgebildet.

Der Riegel 6 weist innenseitig eine den Gleitkanten oder Gleitflächen 5.81, 5.10 zugeordnete Gleitkante oder Gleitfläche 6.8 auf, die ebenfalls schräg zur Längsachse des Riegels 6 bzw. des Verbindungsteils 5 verläuft.

Des Weiteren besitzt das kanalförmige Verbindungsteil 5 an seiner Außenseite axial voneinander beabstandete Vertiefungen 5.11, 5.12, denen ein mit dem Riegel 6 verbundenes Rastelement 6.2 zugeordnet ist. Das Rastelement 6.2 ist beispielsweise in Form einer federelastischen Rastlasche ausgebildet. Es rastet in zwei verschiedenen Positionen des Riegels 6 relativ zu dem Verbindungsteil 5 in eine der beiden Vertiefungen 5.11, 5.12 ein. Die Vertiefungen 5.11, 5.12 sind einerseits einem Entriegelungszustand und andererseits einem Verriegelungszustand zugeordnet. Die möglichen Bewegungsrichtungen des Riegels 6 sind durch eingeprägte oder aufgedruckte Doppelpfeile 6.3 markiert. Zudem ist der Riegel 6 mit zwei Symbolen 6.4, 6.5 versehen, welche ein geschlossenes und ein geöffnetes Bügelschloss symbolisieren und in Kombination mit den Doppelpfeilen 6.3 die Verschieberichtung zur Einstellung des Entriegelungszustandes bzw. des Verriegelungszustandes anzeigen. Darüber hinaus weist der Riegel 6 auf seiner Außenfläche zwei entgegengesetzt angeordnete Rippenflächen 6.6, 6.7 auf, die als rutschhemmende Griffflächen die manuelle, werkzeuglose Verschiebung des Riegels 6 erleichtern.

In der Verriegelungsstellung bildet der Riegel 6 zusammen mit dem kanalförmigen Verbindungsteil 5 eine (zweiteilige) Mutter. In dieser Stellung kann der Riegel 6 zusammen mit dem Verbindungsteil 5 um die Längsachse des Schraubelements 4 gedreht werden und damit eine Feineinstellung der Montagetiefe des Montagegestells vorgenommen werden. Für eine schnelle Grobeinstellung der Montagetiefe wird der Riegel 6 in die Entriegelungsstellung geschoben und dabei der Eingriff des Innenteilgewindes 5.7 des Verbindungsteils 5 in das Außengewinde 4.1 des Schraubelements 4 durch eine Radialbewegung des Verbindungsteils 5 gelöst. Sodann können die Verbindungsstange (Gewindestange) 4 und das kanalförmige Verbindungsteil 5 relativ zueinander axial verschoben und damit die Montagetiefe des Montagegestells schnell und grob eingestellt werden. Danach werden das Innenteilgewinde 5.7 des Verbindungsteils und das Außengewinde 4.1 der Verbindungsstange durch eine umgekehrte Radialbewegung des Verbindungsteils 5 wieder in Eingriff gebracht und durch Verschiebung des Riegels 6 in die Verriegelungsstellung verriegelt. Bei Bedarf kann dann durch Drehen des Riegels 6 zusammen mit dem damit verriegelten Verbindungsteil 5 um die Längsachse der Gewindestange 4 eine Feineinstellung der Montagetiefe vorgenommen werden.

## Patentansprüche

1. Befestigungsset zum Befestigen eines Montagegestells für Sanitärobjekte, insbesondere für einen Spülkasten, eine WC-Schüssel und/oder ein Waschbecken, an einer Gebäudewand, wobei das Montagegestell aus Hohlprofilstangen gebildet ist,
mit einem mit dem Montagegestell lösbar verbindbaren, kanalförmigen Verbindungsteil (5), das einen radial vorstehenden Verbindungsabschnitt (5.1) aufweist,
mit einer Verbindungsstange (4), die in dem Verbindungsteil (5) gelagert ist, mit einem an einem Ende der Verbindungsstange (4) angebrachten Befestigungsteil (3), das an einer Gebäudewand befestigbar ist, und
mit einem Steckteil (7),
**dadurch gekennzeichnet, dass** das Steckteil (7) zur axialen Festlegung des Verbindungsteils (5) an dem Montagegestell in eine Öffnung (2.6) einer Hohlprofilstange (2) des Montagegestells einsetzbar ist und im montierten Zustand das Verbindungsteil (5) und die Hohlprofilstange (2) zueinander sperrt, wobei der Verbindungsabschnitt (5.1) einen Spalt (5.2) aufweist, in den ein Abschnitt einer Hohlprofilstangenwand (2.5) des Montagegestells einbringbar ist.

2. Befestigungsset nach Anspruch 1, **dadurch gekennzeichnet, dass** das Steckteil (7) als Kappe oder Stopfen ausgebildet ist, die/der in eine vertikale Hohlprofilstange (2) des Montagegestells einsteckbar ist.

3. Befestigungsset nach Anspruch 1 oder 2, **dadurch gekennzeichnet, dass** das Steckteil (7) einen deckelartigen Abschnitt (7.1) aufweist, dessen Oberseite vorzugsweise im Wesentlichen eben ausgebildet ist.

4. Befestigungsset nach Anspruch 3, **dadurch gekennzeichnet, dass** das Steckteil (7) an der Unterseite des deckelartigen Abschnitts (7.1) mehrere Vorsprünge (7.2, 7.3) aufweist, wobei mindestens einer der Vorsprünge (7.2) im montierten Zustand des Befestigungssets die Lage des Steckteils (7) relativ zu der Hohlprofilstange (2) festlegt, und wobei mindestens ein anderer der Vorsprünge (7.3) im montierten Zustand des Befestigungssets eine Axialverschiebung des Verbindungsteils (5) sperrt.

5. Befestigungsset nach Anspruch 4, **dadurch gekennzeichnet, dass** der die Lage des Steckteils (7) relativ zu der Hohlprofilstange (2) festlegende Vorsprung (7.2) kragenförmig ausgebildet ist.

6. Befestigungsset nach Anspruch 4 oder 5, **dadurch gekennzeichnet, dass** der eine Axialverschiebung des Verbindungsteils (5) sperrende Vorsprung aus mehreren Stegen (7.3) gebildet ist, die einen kreuzförmigen Durchgang begrenzen.

7. Befestigungsset nach Anspruch 6, **dadurch gekennzeichnet, dass** der jeweilige Steg (7.3) ein L- oder winkelförmiges Querschnittprofil aufweist.

8. Befestigungsset nach einem der Ansprüche 1 bis 7, **dadurch gekennzeichnet, dass** der Spalt (5.2) durch zwei an dem Verbindungsabschnitt (5.1) ausgebildete Flansche (5.3, 5.4) definiert ist.

9. Befestigungsset nach Anspruch 8, **dadurch gekennzeichnet, dass**
der Flansch (5.3), der im montierten Zustand des Befestigungssets innerhalb der Hohlprofilstange (2) angeordnet ist, kreisförmig oder im Wesentlichen kreisförmig ausgebildet ist.

10. Befestigungsset nach einem der Ansprüche 8 oder 9, **dadurch gekennzeichnet, dass** der Flansch (5.4), der im montierten Zustand des Befestigungssets außerhalb der Hohlprofilstange (2) angeordnet ist, nicht-kreisförmig, vorzugsweise im Wesentlichen oval ausgebildet ist.

11. Befestigungsset nach den Ansprüchen 9 und 10, **dadurch gekennzeichnet, dass** der kreisförmige oder im Wesentlichen kreisförmige Flansch (5.3) einen Außendurchmesser aufweist, der größer ist als ein radiales Außenmaß des nicht-kreisförmigen oder im Wesentlichen oval ausgebildeten Flansches (5.4).

12. Befestigungsset nach Anspruch 11, **dadurch gekennzeichnet, dass** der nicht-kreisförmige oder im Wesentlichen ovale Flansch (5.4) ein weiteres radiales Außenmaß aufweist, das größer ist als der Außendurchmesser des kreisförmigen oder im Wesentlichen kreisförmigen Flansches (5.3).

13. Befestigungsset nach einem der Ansprüche 1 bis 12, **dadurch gekennzeichnet, dass** das Verbindungsteil (5) einen Innengewindeabschnitt (5.7) aufweist und/oder dass die Verbindungsstange (4) als Gewindestange ausgeführt ist.

14. Verwendung eines Befestigungssets nach einem der Ansprüche 1 bis 13 zum Befestigen eines Montagegestells für ein oder mehrere Sanitärobjekte, insbesondere für einen Spülkasten, eine WC-Schüssel und/oder ein Waschbecken, an einer Gebäudewand.

## Claims

1. Fixing set for fixing a mounting frame for sanitary objects, in particular for a cistern, a toilet bowl and/or a washbasin, to a building wall, wherein the mounting frame is formed from hollow profile bars, comprising:
a channel-shaped connecting part (5) which is releasably connectable to the mounting frame and has a radially projecting connecting portion (5.1),
a connecting bar (4), which is mounted in the connecting part (5),
a fixing part (3) attached to one end of the connecting bar (4), the fixing part (3) is fixable to a building wall, and
a plug-in part (7),
**characterized in that** the plug-in part (7) is insertable into an opening (2.6) of a hollow profile bar (2) of the mounting frame for axially fixing the connecting part (5) to the mounting frame and, in the assembled state, locks the connecting part (5) and the hollow profile bar (2) relative to one another, the connecting portion (5.1) having a gap (5.2) into which a portion of a hollow profile bar wall (2.5) of the mounting frame can be introduced.

2. Fixing set according to claim 1, **characterized in that** the plug-in part (7) is designed as a cap or plug which is insertable into a vertical hollow profile bar (2) of the mounting frame.

3. Fixing set according to claim 1 or 2, **characterized in that** the plug-in part (7) has a cover-like portion (7.1), the upper side of which is preferably substantially flat.

4. Fixing set according to claim 3, **characterized in that** the plug-in part (7) has a plurality of projections (7.2, 7.3) on the underside of the cover-like portion (7.1), at least one of the projections (7.2) determining the position of the plug-in part (7) relative to the hollow profile bar (2) in the assembled state of the fixing set, and at least one other of the projections (7.3) blocking an axial displacement of the connecting part (5) in the assembled state of the fixing set.

5. Fixing set according to claim 4, **characterized in that** the projection (7.2) fixing the position of the plug-in part (7) relative to the hollow profile bar (2) is of collar-shaped construction.

6. Fixing set according to claim 4 or 5, **characterized in that** the projection blocking an axial displacement of the connecting part (5) is formed by a plurality of webs (7.3) which delimit a cross-shaped passage.

7. Fixing set according to claim 6, **characterized in that** the respective web (7.3) has an L-shaped or angular cross-sectional profile.

8. Fixing set according to any one of claims 1 to 7, **characterized in that** the gap (5.2) is defined by two flanges (5.3, 5.4) formed on the connecting portion (5.1).

9. Fixing set according to claim 8, **characterized in that** the flange (5.3), which in the mounted state of the fixing set is arranged inside the hollow profile bar (2), is circular or substantially circular.

10. Fixing set according to claim 8 or 9, **characterized in that** the flange (5.4), which in the assembled state of the fixing set is arranged outside the hollow profile bar (2), is non-circular, preferably substantially oval.

11. Fixing set according to claims 9 and 10, **characterized in that** the circular or substantially circular flange (5.3) has an outer diameter which is larger than a radial outer dimension of the non-circular or substantially oval flange (5.4).

12. Fixing set according to claim 11, **characterized in that** the non-circular or substantially oval flange (5.4) has a further radial outer dimension which is greater than the outer diameter of the circular or substantially circular flange (5.3).

13. Fixing set according to any one of claims 1 to 12, **characterized in that** the connecting part (5) has an internally threaded portion (5.7) and/or that the connecting bar (4) is designed as a threaded rod.

14. Use of a fixing set according to any one of the claims 1 to 13 for fixing a mounting frame for one or more sanitary objects, in particular for a cistern, a toilet bowl and/or a wash basin, to a building wall.

## Revendications

1. Ensemble de fixation servant à la fixation, sur un mur de bâtiment, d'un bâti de montage pour des objets sanitaires, en particulier pour un réservoir de chasse d'eau, une cuvette de WC et/ou un lavabo, où le bâti de montage est formé par des tiges à profil creux,
ledit ensemble de fixation comprenant:
une pièce d'assemblage (5), en forme de canal,
pouvant être assemblée de manière amovible avec le bâti de montage, laquelle pièce d'assemblage présente une partie.d'assemblage (5.1) faisant saillie radialement,
une tige d'assemblage (4) qui est logée dans la pièce d'assemblage (5),
une pièce de fixation (3) placée au niveau d'une extrémité de la tige d'assemblage (4), laquelle pièce de fixation peut être fixée sur un mur de bâtiment, et
une pièce emboîtable (7),
**caractérisé en ce que** la pièce emboîtable (7), qui sert à l'immobilisation axiale de la pièce d'assemblage (5) sur le bâti de montage, peut être introduite dans une ouverture (2.6) d'une tige à profil creux (2) du bâti de montage et, à l'état monté, ladite pièce emboîtable bloque la pièce d'assemblage (5) et la tige à profil creux (2), l'une par rapport à l'autre, où la partie
d'assemblage (5.1) présente un intervalle (5.2) dans lequel peut être insérée une partie d'une paroi (2.5) de la tige à profil creux du bâti de montage.

2. Ensemble de fixation selon la revendication 1, **caractérisé en ce que** la pièce emboîtable (7) est configurée comme un capuchon ou un bouchon, l'un ou l'autre pouvant être emboîté dans une tige verticale à profil creux (2) du bâti de montage.

3. Ensemble de fixation selon la revendication 1 ou 2, **caractérisé en ce que** la pièce emboîtable (7) présente une partie (7.1) en forme de couvercle, partie dont le dessus est configuré de préférence pratiquement de manière plane.

4. Ensemble de fixation selon la revendication 3, **caractérisé en ce que** la pièce emboîtable (7) présente, sur le dessous de la partie (7.1) en forme de couvercle, plusieurs parties saillantes (7.2, 7.3), où au moins l'une des parties saillantes (7.2), quand l'ensemble de fixation est monté, immobilise la position de la pièce emboîtable (7) par rapport à la tige à profil creux (2), et où au moins une autre des parties saillantes (7.3), quand l'ensemble de fixation est monté, bloque un déplacement axial de la pièce d'assemblage (5).

5. Ensemble de fixation selon la revendication 4, **caractérisé en ce que** la partie saillante (7.2) immobilisant la position de la pièce emboîtable (7) par rapport à là tige à profil creux (2) est configurée en forme de collerette.

6. Ensemble de fixation selon la revendication 4 ou 5, **caractérisé en ce que** la partie saillante bloquant un déplacement axial de la pièce d'assemblage (5) est formée par plusieurs âmes (7.3) qui délimitent un passage cruciforme.

7. Ensemble de fixation selon la revendication 6, **caractérisé en ce que** l'âme respective (7.3) présente un profil de section en forme de L ou de forme angulaire.

8. Ensemble de fixation selon l'une quelconque des revendications 1 à 7, **caractérisé en ce que** l'intervalle (5.2) est défini par deux brides (5.3, 5.4) configurées sur la partie d'assemblage (5.1).

9. Ensemble de fixation selon la revendication 8, **caractérisé en ce que** la bride (5.3) qui, lorsque l'ensemble de fixation est monté, est disposée à l'intérieur de la tige à profil creux (2), est configurée en étant de forme circulaire ou en étant pratiquement de forme circulaire.

10. Ensemble de fixation selon l'une des revendications 8 ou 9, **caractérisé en ce que** la bride (5.4) qui, lorsque l'ensemble de fixation est monté, est disposée à l'extérieur de la tige à profil creux (2), est configurée en étant de forme non circulaire, de préférence en étant pratiquement de forme ovale.

11. Ensemble de fixation selon les revendications 9 et 10, **caractérisé en ce que** la bride (5.3) de forme circulaire ou pratiquement de forme circulaire présente un diamètre extérieur qui est plus grand qu'une dimension extérieure radiale de la bride (5.4) configurée en étant de forme non circulaire ou en étant pratiquement de forme ovale.

12. Ensemble de fixation selon la revendication 11, **caractérisé en ce que** la bride (5.4) de forme non circulaire ou pratiquement de forme ovale présente une autre dimension extérieure radiale qui est plus grande que le diamètre extérieur de la bride (5.3) de forme circulaire ou pratiquement de forme circulaire.

13. Ensemble de fixation selon l'une quelconque des revendications 1 à 12, **caractérisé en ce que** la pièce d'assemblage (5) présente une partie (5.7) comportant un filetage intérieur et/ou **en ce que** la tige d'assemblage (4) est réalisée comme une tige filetée.

14. Utilisation d'un ensemble de fixation selon l'une quelconque des revendications 1 à 13, ledit ensemble de fixation.servant à la fixation, sur un mur de bâtiment, d'un bâti de montage pour un ou plusieurs objets sanitaires, en particulier pour un réservoir de chasse d'eau, une cuvette de WC et/ou un lavabo.
